# EUROPEAN PATENT APPLICATION

(11) **EP 4 575 277 A2**
(43) Date of publication of application: **25.06.2025**
(21) Application number: 24222732.0
(22) Date of filing: 23.12.2024
(51) Int. Cl.: F16J 15/02, F16J 15/06, F16L 21/00, F24F 13/02, B23P 19/08, F16L 21/035

(54) **SEALING RUBBER FOR A TUBULAR ELEMENT**

(30) Priority: 22.12.2023 BE 202306048; 22.12.2023 BE 202306049
(71) Applicant: Vento NV, 9700 Oudenaarde (BE)
(72) Inventor: DE DONCKER, Bart, 9700 Oudenaarde (BE); MODDE, Bart, 9700 Oudenaarde (BE)
(74) Representative: Brantsandpatents bv

(57) **Abstract**

The present invention relates to a sealing rubber (1) suitable for providing on the outside of a tubular element to create a seal when the tubular element is placed in an outer tubular element. It comprises a base (2) and at least three lips (7, 8, 9). The first lip (7) and the second lip (8) are provided on a top side (3) of the base (2). The first lip (7) is provided on a first end (5) of the base (2) and the third lip (9) on a second end (6) of the base (2). The second lip (8), positioned between the first (7) and the third lip (9), has a height that is smaller than a width measured across the base (2) between the first lip (7) and the second lip (8), and the height of the second lip (8) is smaller than the height of the first lip (7).

## Description

### TECHNICAL FIELD

The invention relates to a sealing rubber for a tubular element to be used in a duct system, particularly a ventilation duct system.

In another aspect, the invention also relates to a kit and a use for sealing tubular elements.

In another aspect, the invention relates to a device, a method, and a use for applying a sealing rubber to a tubular element.

### PRIOR ART

When installing duct elements, especially in ventilation duct systems, it is important that the joints between the tubular elements are adequately sealed.

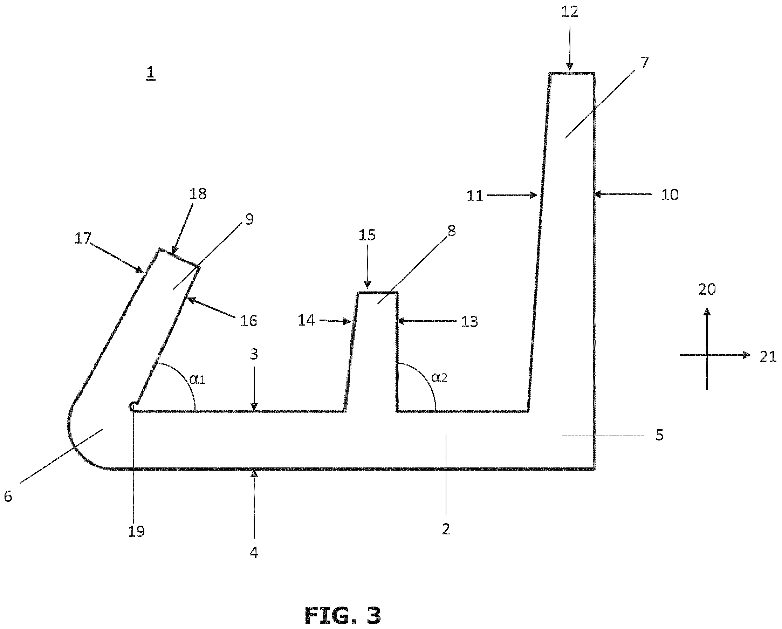

Typically, a sealing ring with an L-shaped cross-section will be used for this. US3955834 discloses various ways of applying sealants in the joint between a pipe connector inserted into two pipes, connecting them together. Figures 3-9 and 13-15 show how an external, peripheral, flexible sealing ring with an L-shaped cross-section is mounted at the end of a tubular element. The sealing ring is placed with its base against the outer surface of the tubular element, after which the free end portion of the tubular element is bent backward and outward and returned to the wall of the tubular element. The sealing ring has a sealing lip that extends radially from the base and is adapted to seal against an inner surface of an outer tube, into which the tubular element is inserted.

This typical sealant will seal the joint between two tubular elements, but has several disadvantages. Placing the base of the L-shaped sealing ring on a protruding step makes the assembly operation complicated, as it often requires manual adjustments prior to the bending operation. Furthermore, the ring tends to shift during the bending process, which can reduce the reliability of the seal. This problem is exacerbated with larger pipe diameters, wherein the sealing ring is prone to tilting, resulting in incorrect placement that needs to be manually corrected. A particular disadvantage observed in practice with the use of the known L-shaped sealing rings is that they are very difficult, if not impossible, to disassemble. Once mounted, the combination of the bending of the pipe end and the position of the ring provides a very strong clamping force. This mounting firmness, although initially beneficial for the sealing, causes problems when disassembly is necessary, for instance for maintenance or replacement. The force required to detach the sealing ring can damage both the ring and the tubular element, leading to additional time and costs for repair or replacement.

In practice, it has also been found that this well-known L-shaped sealing ring has particular disadvantages for pipes with a large diameter, for example, greater than approximately 300 mm. In tubular elements with such a large diameter, the radial dimension of the sealing lip is greater than the axial dimension of the base. Such sealing rings tend to "tilt" about 90°, meaning that the sealing ring lies against the wall of the tubular body, while the base of the sealing ring is directed radially outward from the tubular wall. This incorrect placement must be manually corrected during assembly.

Given the mentioned disadvantages, there is a clear need for an improved sealing means that not only provides a reliable seal but is also easier to assemble and disassemble, without compromising the sealing quality. The present invention aims to at least find a solution to some of the above-mentioned problems or disadvantages.

### SUMMARY OF THE INVENTION

In a first aspect, the present invention relates to a sealing rubber according to claim 1. Prefer embodiments of the sealing rubber are shown in claims 2 to 14.

The invention concerns a sealing rubber for tubular elements, with three lips on a base. The first and second lips provide sealing against the inner surface of the outer tubular element, while the third lip is clamped by the end portion of the tubular element. A unique feature is that the second lip has a smaller height than the first, resulting in improved sealing and stability. This design allows for an airtight connection, crucial in systems where leak tightness is essential, such as in air duct systems. The sealing rubber is not only effective but also easy to assemble and disassemble. The design meets airtightness classes and uses an elastomer, preferably ethylene propylene diene monomer rubber, with a hardness of about 70 Shore A and an optimal density for a good balance between weight and strength.

One objective of the present invention is to provide a sealing rubber suitable for providing a reliable seal between tubular elements.

A specific objective of the present invention is to provide a sealing rubber suitable for assembling and disassembling the tubular elements.

In a second aspect, the present invention relates to a kit according to claim 15.

In a third aspect, the present invention relates to a use according to claim 16. This use provides a reliable and durable solution against leaks, essential for system efficiency and preventing damage from moisture or contaminants. This is crucial in ventilation systems, where precise control of airflows is essential. The adaptability of the sealing rubber to different pipe diameters and shape tolerances contributes to consistent sealing performance, which promotes the efficiency of the ventilation system and minimizes the spread of unwanted airflows. This contributes to an optimally functioning and energy-efficient ventilation system.

### DESCRIPTION OF THE FIGURES

**Figures 1 to 5** each show a cross-sectional view of the sealing ring according to various embodiments of the present invention.
**Figure 6** shows a schematic representation of a finger provided with 1 gripper plate according to an embodiment of the present invention.
**Figure 7** shows a perspective view of a full cartridge of the seal magazine according to an embodiment of the present invention.
**Figure 8** shows a perspective view of an empty cartridge of the seal magazine according to an embodiment of the present invention.
**Figure 9** shows a perspective view of a cartridge of the seal magazine positioned at the seal applicator according to an embodiment of the present invention.
**Figure 10** shows a perspective view of a cartridge of the seal magazine positioned at the seal applicator according to an embodiment of the present invention.
**Figure 11** shows a perspective view of a cartridge of the seal magazine positioned at the seal applicator according to an embodiment of the present invention.
**Figure 12** shows a perspective view of a cartridge of the seal magazine positioned at the seal applicator according to an embodiment of the present invention.
**Figure 13** shows a top view of the seal magazine according to an embodiment of the present invention.
**Figure 14** shows a front view of the seal applicator according to an embodiment of the present invention.

### DETAILED DESCRIPTION

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, it must be understood that the value of a quantity used where the term "about" or "around" is used, is itself specifically disclosed.

The terms "comprise," "comprising," "consist of," "consisting of," "provided with," "include," "including," "contain," "containing," are synonyms and are inclusive or open terms that indicate the presence of what follows, and which do not exclude or prevent the presence of other components, characteristics, elements, members, steps, as known from or disclosed in the prior art.

The term "tubular element" in this context can refer to fittings, connectors, flanges, couplings, T-pieces, bends, transition pieces, end caps, and any other component that is part of a pipe or duct system through which liquids or gases are transported. These elements provide the necessary connections and transitions between different sections of the system or duct, preferably a ventilation duct. Preferably, the tubular elements have a diameter ranging from 80 mm to 315 mm.

The term "sealing rubber" is synonymous with "seal," "sealing rubber," "sealing ring" and should be understood as a flexible material unit, typically in the form of a ring, that serves to create a sealing barrier between components, such as between two tubular elements, to prevent leakage or unwanted passage of substances.

The term "hardness" or "Shore A hardness" refers to a measure of the hardness of elastomers, such as rubber, and other soft polymers. It indicates how much resistance a material offers to compression under a standardized force. The "A" in Shore A refers to the scale used for softer materials, while other scales, such as Shore D or Shore B, are used for harder or softer materials. To measure Shore A hardness, an instrument called a durometer is used. The standard procedure involves pressing a spring-loaded steel pin into the material and measuring the resistance to indentation. The pin has a precise shape, usually a rounded tip, and the spring exerts a standardized force. The depth of the indentation determines the hardness value on the Shore A scale. The scale ranges from 0 to 100, where higher values indicate a harder material. A value of 0 Shore A would, for example, be extremely soft, practically liquid, while a value of 100 Shore A would indicate very hard rubber.

The terms "density" or "mass density" of the sealing rubber refer to the mass per unit of volume that the material occupies and is expressed in grams per cubic centimeter (g/cm³). It is a measure of how compact the material is. A higher density indicates less empty space within the structure of the material, which suggests the presence of more material in a given volume and thus a potentially heavier and sturdier substance. The density of sealing rubber is determined by first weighing the mass and then measuring the volume by submerging the rubber in a liquid, usually water, to measure the fluid displacement according to Archimedes' principle. Another method for measuring the volume is using a pycnometer, which provides highly accurate volume measurements. The density is then calculated by dividing the mass (in grams) by the volume (in cubic centimeters), resulting in a density value expressed in g/cm³.

The term "radius" is synonymous with radii and is the measured distance from any point on the edge of a circle (or sphere, or cylinder) to the center. In the context of this invention, a radius is determined in a cross-sectional view of the sealing rubber, indicating the extent of the rounding or curvature in the design.

The term "full cartridge" should be understood in this context as a tube provided with one or more sealing rubbers.

The term "empty cartridge" should be understood in this context as a tube that contains no sealing rubbers.

Quoting numeric intervals by the endpoints includes all integers, fractions, and/or real numbers between the endpoints, including those endpoints.

In a first aspect, the invention relates to a sealing rubber suitable for providing on an outside of a tubular element to create a seal when the tubular element is placed in an outer tubular element. The sealing rubber comprises a base and at least three lips. The first and second lips are suitable for sealing against an inner surface of the outer tubular element and are provided on a top side of the base. The first lip is provided at a first end of the base. The second lip is provided between the first and the third lip. The third lip is suitable for being clamped by an end portion of the outer tubular element and is provided on the top side or an underside of the base. The third lip is provided at a second end of the base.

In particular, a second lip has a height that is smaller than a width measured across the base between the first lip and the second lip, and the height of the second lip is smaller than a height of a first lip. This unique feature ensures improved sealing and stability.

The sealing rubber is optimal for achieving an airtight connection between tubular elements, crucial in systems where leak tightness is of utmost importance. This design of the three upstanding lips, strategically positioned on the base of the sealing rubber, provides a superior seal against the inner surface of an enclosing tubular element. The first and second lips serve to seal the connection, while the third lip, positioned at the other end of the base, ensures a firm anchoring within the outer tubular element. This design not only guarantees a reliable seal but also allows for easy and quick assembly and disassembly, thereby reducing both installation and maintenance time.

Moreover, this unique design, where the height of the second lip is smaller than that of the first, provides an additional advantage in terms of sealing and stability. This configuration ensures that the sealing rubber adapts to variations in the inner surface of the outer tubular element, providing a more consistent and reliable seal. The sealing rubber is designed such that the second lip has a smaller height than the first, which plays an essential role in both the functionality and durability of the sealing rubber. This smaller height ensures that, when the sealing rubber is mounted, the lips do not touch or overlap. This space between the lips is crucial, as it prevents friction and the associated wear, which extends the lifespan of the seal. Furthermore, this distance between the lips makes the disassembly of the tubular element surprisingly easy. It avoids the lips sticking to each other or to the inner surface of the tubular element, which would otherwise make maintenance and replacement of parts time-consuming and complex. The smaller height of the second lip also contributes to the overall stability of the system by evenly distributing the forces over the sealing interface. This is especially beneficial in applications where pressure and flow optimization are essential, such as in air duct systems, and enhances the operational efficiency and safety of such systems. Through this smart design choice, the sealing rubber is not only effective in its primary function of providing an airtight seal but also exceptionally easy to assemble and disassemble.

In the complex dynamics of ventilation and climate control systems, airtightness plays a vital role, especially when safety risks such as the spread of hazardous gases or contaminated air are a concern. Although a completely airtight system is rarely required, safety standards and economic considerations dictate the need for strict control of air leakage. The leaks, which mainly occur at seams and connections, can significantly contribute to energy loss and operational costs. The internationally recognized airtightness classes A, B, C, and D, established by NEN-EN 1507 and 12237 standards, provide a framework for determining acceptable levels of air leakage. The design of the sealing rubber proposed in the present invention takes these leakage standards into account. The sealing rubber is designed such that the leakage factors will remain within the limits of airtightness class D. This requires precise dimensions and strategic placement of the lips to ensure they seal adequately without touching each other, allowing for both a reliable seal and easy disassembly. By integrating these standards into the design and manufacture of the sealing rubber, the efficiency of the air duct system can be maximized while minimizing energy consumption and operational costs. Carefully calibrating the leakage factors and maintaining strict production controls are essential to meet the high standards set for modern air handling installations.

According to a further or alternative embodiment, the first lip in cross-section is provided with a first side, an opposite second side, and a top side connecting the first side and the second side, wherein the first side of the first lip is provided upright on the base. The first side of the first lip standing upright on the base provides a crucial initial barrier against leaks. This upright position allows for optimal contact with the inner surface of the tubular element, which is essential for effective sealing. It provides direct and firm support, making the lip resistant to the pressure of the flowing media within the tubular element.

According to a further or alternative embodiment, the second side of the first lip tapers towards the top side, wherein the first lip in cross-section has a ratio between a width at the base and a width at the top side of at least 1.0 and at most 3.0, preferably at least 1.2 and at most 2.8, more preferably at least 1.4 and at most 2.6, even more preferably at least 1.6 and at most 2.4, even more preferably at least 1.8 and at most 2.2, and in particular at least 1.9 and at most 2.1. The tapered second side of the first lip optimizes the sealing function by providing a gradual transition from the lip to the top side. This conical design helps absorb and distribute the mechanical stresses that arise from pressure changes within the system, maintaining the integrity of the seal over a longer period. Moreover, the tapered shape allows the sealing rubber to adapt to small irregularities in the inner surface of the tubular element, contributing to a more forgiving and resilient seal. The inventors have found that the proposed ratio between the width at the base and the width at the top side of the first lip will maximize functionality. A wider base provides stable attachment to the rubber base and an effective sealing surface, while a narrower top side ensures flexibility and a good fit against the inside of the tubular element. This design ensures that the sealing rubber can withstand a wide range of pressure variations without losing its sealing capacity.

According to a further or alternative embodiment, the second lip in cross-section is provided with a first side, an opposite second side, and a top side connecting the first side and the second side, wherein the first side of the second lip is provided facing the second side of the first lip and standing upright on the base, preferably the first side of the second lip makes an angle of at least 85° and at most 95°, preferably at least 86° and at most 94°, more preferably at least 87° and at most 93°, even more preferably at least 88° and at most 92°, even more preferably at least 89° and at most 91° and in particular about 90° to the base. This shape of the second lip, with an upright first side forming an almost perpendicular angle with the base, is designed to closely follow the contours of the tubular element. This nearly vertical orientation is optimal for creating a second line of defense against leakage, providing a strong yet flexible barrier that works with the first lip to form a reliable seal. The fact that the first side of the second lip is directed towards the second side of the first lip means that the two lips together form a cohesive sealing system where the pressure is distributed over multiple points, increasing durability. The angle at which the first side of the second lip is placed contributes to this effective pressure distribution and ensures a resilient connection that withstands variations in pressure and movement within the tubular system.

According to a further or alternative embodiment, the second side of the second lip tapers towards the top side, wherein the second lip in cross-section has a ratio between a width at the base and a width at the top side of at least 1.0 and at most 3.0, preferably at least 1.2 and at most 2.8, more preferably at least 1.4 and at most 2.6, even more preferably at least 1.6 and at most 2.4, even more preferably at least 1.8 and at most 2.2, and in particular at least 1.9 and at most 2.1. Just like the first lip, the tapered second side of the second lip provides a gradual transition from the base to the top side, promoting sealing and allowing for adaptation to any irregularities within the tubular element. The ratio between the width at the base and the width at the top side of the second lip is also carefully chosen here to provide a good balance between flexibility and structural integrity. This design ensures a sealing rubber that not only offers a strong seal but is also resistant to the physical forces that occur during normal operating conditions.

According to a further or alternative embodiment, the third lip is provided on the top side of the base and at an angle to the base of at least 50° and at most 85°, preferably at least 52° and at most 80°, more preferably at least 54° and at most 75°, even more preferably at least 56° and at most 70°, even more preferably at least 58° and at most 65° and in particular about 60°. The specific positioning of the third lip is an important feature that contributes to the overall effectiveness of the sealing rubber. By placing the third lip at an angle of at least 50° to at most 85° relative to the base, a design is realized that fulfills two essential functions: on the one hand, reinforcing the seal and on the other hand, facilitating installation. The angle of the third lip ensures that, when the sealing rubber is compressed with the outer tubular element, an optimal force is exerted that strengthens the seal. This helps form a more dynamic seal that can adapt to changes in pressure and temperature, leading to a long-lasting and durable seal. The angle allows the third lip to act as a kind of wedge, keeping the tubular element firmly in place and reducing the chance of shifting, loosening, or tilting of the sealing rubber, even under heavy operating conditions. Moreover, the angled placement of the third lip offers a mechanical advantage during installation. The third lip will serve as a guide for correctly positioning the sealing rubber during assembly, ensuring quick and proper installation. It also facilitates a "click" effect when the sealing rubber is placed in the tubular element, providing the installer with a clear indication that the element is correctly installed. This design aspect ensures intuitive assembly, reducing installation time and improving installation precision, thereby decreasing the chance of errors during the assembly process. The chosen angle for the third lip of the sealing rubber is the result of a meticulous design striving for a balance between flexibility and firmness. The maximum angle ensures that the third lip functions as an effective clamping mechanism without the risk of excessive stiffness and excessive protrusion of the lip, which could complicate installation and removal. On the other hand, a minimum angle prevents the lip from lying too flat, which would reduce the clamping force and potentially make the seal less effective, especially under dynamic loads.

According to a further or alternative embodiment, the third lip includes a first side located along the second lip, wherein the first side of the third lip includes a notch, preferably the notch is provided on the base. The notch will improve the flexibility of the third lip. By having a strategically placed notch, the third lip will possess some degree of pliability needed to adapt the lip to variations in the shape of the tubular element and to absorb the stresses that may occur during installation and use. The notch will thus act as a stress distributor, reducing the concentration of mechanical stress at one point. This will improve the durability of the sealing rubber and extend the product's lifespan, as it helps prevent cracks or breaks that can arise from continuous flexing or pressure. Furthermore, the notch will also contribute to the overall clamping force of the sealing rubber. When the tubular elements are joined together, the notch will allow the third lip to slightly compress and expand, providing a better grip and seal between the sealing rubber and the inner wall of the tubular element.

According to a further or alternative embodiment, the notch has a radius of at least 0.1 mm, preferably at least 0.2 mm, more preferably at least 0.3 mm, even more preferably at least 0.4 mm, even more preferably at least 0.5 mm. Preferably, the notch has a radius of at most 1.0 mm, preferably at most 0.9 mm, more preferably at most 0.8 mm, even more preferably at most 0.7 mm, even more preferably at most 0.6 mm. The third lip is primarily intended for clamping, making the size of the radius a crucial design consideration. The radius of at least 0.1 mm is carefully chosen to ensure that the third lip has sufficient flexibility to clamp without the risk of breaking or damage. This specific notch thus helps in the optimal folding up of the lip, which is necessary for reliable clamping. A smaller radius will offer too little flexibility, making the lip difficult to clamp or wear out faster due to stress on the material. A too large radius may make the lip too flexible, causing it not to clamp firmly enough and thus not be effective in its function.

According to an alternative embodiment, the third lip is provided on the underside of the base. This third lip on the underside will contribute to good anchoring in the groove or attachment point of the tubular element. This helps keep the sealing rubber in place and provides resistance to axial and radial movements. If the surface on the inside or outside of the tubular element has irregularities, the third lip on the bottom can help compensate for these more effectively by adapting to the variations, resulting in a more uniform seal.

According to a further or alternative embodiment, the second end of the base is rounded. Sharp corners can lead to high stress concentrations that increase the likelihood of cracks or breaks. A rounded end distributes the stress more evenly and can thus improve the durability of the sealing rubber. A rounded corner will simplify the assembly of the sealing rubber by making it easier to slide it into the corresponding grooves or over the tubular elements, reducing the chance of damage to both the seal and the pipe element during installation.

According to a further or alternative embodiment, the sealing rubber is made from an elastomer, preferably from an ethylene propylene diene monomer rubber. The choice of ethylene propylene diene monomer (EPDM) rubber for the manufacture of the sealing rubber is strategically chosen to maximize the versatility and durability of the sealing rubber. This material maintains its flexibility and elasticity over a wide temperature range, which is essential for seals that must perform consistently. Moreover, EPDM is resistant to a wide range of chemicals, making the sealing rubber a reliable choice for industrial applications with potential exposure to corrosive substances. Other elastomers such as silicone rubber, known for its superior heat resistance and retention of flexibility at low temperatures, or nitrile rubber (NBR), which is oil and fuel resistant, can also be considered. Fluoroelastomers such as Viton offer even higher chemical resistance, ideal for use in aggressive chemical environments, while natural rubber with its high elasticity and tear resistance could be suitable for applications where mechanical flexibility and durability are crucial. The final choice of material will depend on the specific operational requirements of the sealing rubber and the environment in which it is used.

According to a further or alternative embodiment, the sealing rubber has a hardness of at least 50 and at most 90 Shore A, preferably at least 55 and at most 85 Shore A, more preferably at least 60 and at most 80 Shore A, even more preferably at least 65 and at most 75 Shore A, and in particular about 70 Shore A. The specification of a hardness for the sealing rubber is an important aspect that determines the balance between flexibility and firmness of the material. A Shore A hardness of 50 is on the softer side of the spectrum, giving the sealing rubber greater flexibility and compression capacity, essential for a good seal when it needs to conform to irregular surfaces or compensate for variations in pressure or temperature. On the other hand, a Shore A hardness closer to 90 will indicate a much stiffer material, which can be beneficial for applications where higher resistance to penetration and wear is needed, such as in environments with high loads or where sharp particles may be present. A Shore A hardness of 70 is optimal here because it offers a balance between suppleness and resistance to deformation. At this hardness, the sealing rubber is stiff enough to form a durable and stable seal under pressure, but also flexible enough to adapt to the contours and imperfections of the mating surfaces of the tubular elements. This balance is crucial for maintaining a consistent seal over time, even with thermal expansion or contraction, and with mechanical vibrations or movements that may occur in the system. With a hardness of 70 Shore A, the sealing rubber is also resistant to wear and perforation without compromising the ability to deform and provide a good seal. It is thus a compromise between being too soft, which can lead to faster wear and inadequate pressure resistance, and being too hard, which will result in insufficient flexibility to provide an effective seal. The use of EPDM rubber in combination with this hardness specification ensures that the sealing rubber can deliver optimal performance over a long service life.

According to a further or alternative embodiment, the sealing rubber has a density of at least 0.5 g/cm³ and at most 2.0 g/cm³, preferably at least 0.6 g/cm³ and at most 1.8 g/cm³, more preferably at least 0.7 g/cm³ and at most 1.6 g/cm³, even more preferably at least 0.8 g/cm³ and at most 1.5 g/cm³, even more preferably at least 0.9 g/cm³ and at most 1.4 g/cm³, even more preferably at least 1.0 g/cm³ and at most 1.3 g/cm³, and in particular at least 1.1 g/cm³ and at most 1.2 g/cm³. This optimal density offers an ideal balance between weight and strength. This optimal density ensures that the sealing rubber provides an effective balance between lightness (for easy installation and handling) and robustness (for reliability and long lifespan), offering a good balance between physical strength and flexibility. This ensures that the sealing rubber provides sufficient resistance to mechanical pressure and wear while still being flexible enough to provide a good seal. It is also an indication of the quality of the rubber compound and can reflect the level of filler and the quality of the polymerization process. If the density of the sealing rubber is higher than 2.0 g/cm³, the material may contain a higher concentration of fillers or be more compact, which can lead to increased stiffness and potentially reduced flexibility. This will result in a material that is too hard for the required sealing application, which can make installation more difficult and lead to poor sealing performance. On the other hand, if the density is lower than 0.5 g/cm³, the sealing rubber will be too soft or too porous, which would provide high compression and flexibility but could compromise structural integrity and durability. A too low density will lead to problems such as excessive deformation under pressure, reduced ability to retain shape, and greater susceptibility to physical damage or wear. Moreover, lighter materials will be less resistant to certain chemicals and have a shorter lifespan under harsh operating conditions.

According to a further or alternative embodiment, the sealing ring is annular, suitable for providing on the outside of a tubular element. The sealing rubber is annular so that it is suitable for the outside of a tubular element, and its use is intended for sealing the gaps or joints between tubular elements to prevent leakage. Annular seals are easy to standardize and can be designed to fit a wide range of pipe diameters, making them versatile for different types of tubular systems. The annular seal is effective in preventing leaks at the connection between a pipe and a corresponding coupling or fitting. The annular shape fits closely and provides a continuous sealing surface without interruptions or weak points.

In a second aspect, the present invention relates to a kit for sealing a tubular element. The kit includes at least two tubular elements and at least one sealing rubber. In particular, the sealing rubber corresponds to one of the sealing rubbers according to the first aspect. The same features and benefits therefore apply. It should be noted that the described sealing rubbers offer optimal sealing when used in combination with a tubular element that has the correct profiling. However, it is important to emphasize that these tubular elements can be different types of tubular elements, as long as they are provided with the correct profiling that is compatible with the sealing rubber.

In this context, "profiling" refers to the specific shape, geometry, or configuration of the tubular element. It is the way the surface of the tubular piece is shaped or structured so that it can seamlessly connect to the sealing rubber and provide an effective seal. The seal is optimal when the profiling of the tubular element closely matches the properties of the sealing rubber. This ensures that there is no room for leakage and that the seal is durable and reliable.

In a third aspect, the invention relates to the use of the sealing rubber for sealing tubular elements. The use of the sealing rubber for sealing tubular elements is advantageous because it provides a reliable and durable solution against leaks, which is essential for maintaining system efficiency and preventing damage from moisture or contaminants. The unique design features, such as the specific hardness and density, ensure an optimal balance between flexibility and strength, allowing the sealing rubber to adapt to different pipe diameters and shape tolerances while still delivering consistent sealing performance. This not only reduces maintenance costs and extends the lifespan of the pipe systems but also contributes to the overall safety and reliability of the installations in which they are used.

In what follows, the invention is described by way of non-limiting figures illustrating the invention, and which are not intended to and should not be interpreted as limiting the scope of the invention.

In a fourth aspect, the invention relates to a device for applying a sealing rubber to a tubular element. The device comprises a seal magazine for storing the sealing rubbers and a seal applicator for selecting and applying the selected sealing rubber to the tubular element.

The seal magazine allows for the storage of multiple sealing rubbers and enables efficient storage and selection of sealing rubbers. To this end, the seal magazine is capable of rotating around its own central axis and includes at least 2 metal cartridges, preferably at least 3 metal cartridges, more preferably at least 4 metal cartridges, even more preferably at least 5 metal cartridges, and even more preferably at least 6 metal cartridges. Preferably, the metal cartridges will protrude from a housing. This means that the metal cartridges extend or emerge from an enclosing structure or housing. The unique design of these cartridges allows for the storage of multiple rubbers per cartridge.

Preferably, each cartridge is further provided with a disk that pushes the sealing rubber linearly over the entire length of the cartridge. This ensures that the rubbers are stored and transported in an organized and structured manner, making the sealing rubbers ready for use when needed.

According to a further or alternative embodiment, each cartridge has a diameter of at least 50 mm and at most 600 mm, preferably at least 100 mm and at most 550 mm, more preferably at least 120 mm and at most 500 mm, even more preferably at least 140 mm and at most 450 mm, even more preferably at least 160 mm and at most 400 mm, even more preferably at least 180 mm and at most 350 mm, even more preferably at least 200 mm and at most 300 mm, and even more preferably at least 220 mm and at most 250 mm, where different cartridges are suitable for storing sealing rubbers with different diameters and thicknesses. A cartridge diameter that is at least 5 mm smaller than the diameter of the sealing rubber to be placed will cause unnecessary movement of the sealing rubber on the cartridge. On the other hand, a cartridge diameter that is at least 5 mm larger than the diameter of the sealing rubber to be placed will cause problems when placing and taking the sealing rubber on the cartridge, which can affect the automation and efficiency of the process. It is essential to maintain the optimal diameter to ensure smooth operation and optimal performance of the system.

According to a further or alternative embodiment, each cartridge has a diameter between 2.0% and 7.0%, preferably between 2.5% and 6.5%, more preferably between 3.0% and 6.0% smaller than the diameter of the sealing rubber. It is intended that the sealing rubber is slightly larger than the cartridge, allowing for some play. This deliberate play ensures that the sealing rubber can move freely on the cartridge. The purpose of this setup is to ensure easy shifting of the sealing rubber on the cartridge, which is essential for smooth operation and optimal sealing in various applications.

Preferably, the sealing rubbers applied to the cartridges in the seal magazine will have different diameters and thicknesses depending on the product or the tubular elements around which the sealing rubber is mounted. Preferably, each cartridge will include at least 1 and at most 100 sealing rubbers, more preferably at least 2 and at most 90, even more preferably at least 10 and at most 80, even more preferably at least 20 and at most 70, even more preferably at least 30 and at most 60, even more preferably at least 40 and at most 50. It is clear that a cartridge on which wide sealing rubbers with a large diameter are stored will contain fewer sealing rubbers than a cartridge that includes narrow sealing rubbers with a small diameter. The use of metal cartridges in the seal magazine offers flexibility through the interchangeability of the cartridges, allowing the seal magazine to be adapted to different product diameters, i.e., the diameter of the sealing rubber. This means that the cartridges are designed to be easily interchangeable, allowing the seal magazine to be flexibly adapted to different product diameters.

According to a further or alternative embodiment, the cartridges of the seal magazine include a first end and an opposite second end, wherein the first end is located at the housing, wherein the second end is provided with at least 4 recesses for receiving the fingers of the seal applicator. Each cartridge is provided with recesses to prevent the fingers from colliding with the metal cartridges. The fingers move within these recesses to grip a sealing rubber. This ensures smooth and unhindered movement of the fingers, allowing the gripping process of the sealing rubber to proceed accurately and efficiently.

The seal applicator is responsible for selecting and applying the sealing rubber to the tubular element. For this purpose it is provided with at least 4 fingers, preferably at least 5 fingers and more preferably at least 6 fingers. Each finger includes one or more gripper plates to grip the rubbers. The fingers are precisely positioned and designed to effortlessly select and apply a sealing rubber from the magazine to the tubular element. If fewer than 4 fingers are used, it is impossible to stretch the rubber sufficiently to the correct shape needed to be placed around the tubular element. This further limits the ability to accurately and evenly manipulate the rubber seal during the stretching process and results in significantly reduced stability and control over the sealing rubber. This makes it more difficult to perform the desired manipulations. The use of at least four fingers is therefore essential to provide the required stability, control, and precision needed to effectively shape the sealing rubber and apply it to the tubular element.

According to a further or alternative embodiment, the finger is cube-shaped, and preferably beam-shaped. The finger has a top and a bottom. The bottom is configured to be attached to or on the seal applicator, for example with one or more holes (8) for the placement of screws or similar fasteners. The top of the finger is provided with one or more gripper plates that can receive the sealing rubber. To make this possible, the gripper plate is provided with an inclined side, causing the rubber to tilt slightly backward when stretched. In this way, the rubber fits perfectly into the beveling. The inclined side has the widest point along the top of the finger and narrows as it extends.

According to a further or alternative embodiment, the fingers of the seal applicator are provided in a circular arrangement, wherein a first end of the fingers is positioned on a first radius of a circle, wherein each finger extends from the first radius towards a second larger radius of the circle, wherein a second end of the fingers is provided on the second larger radius of the circle, wherein the first radius and the second radius are in line with each other. The circular design offers even and balanced force distribution during the manipulation of the rubber seals. By allowing the fingers to reach from a smaller radius to a larger radius, the fingers with gripper plates of the seal applicator will efficiently grip and stretch the rubber seals to remove the sealing rubber from the cartridge. This process shapes the sealing rubber so that it is suitable for placement on a tubular element.

According to a further or alternative embodiment, a finger includes two or more gripper plates. A first gripper plate is provided at the first end of the finger, and a second gripper plate is provided at the second end of the finger.

According to a further or alternative embodiment, the gripper plates are each placed at the first end of the fingers and will form an angle of at least 45°, preferably at least 50°, more preferably at least 55°, even more preferably at least 60°, even more preferably at least 65°, even more preferably at least 70°, even more preferably at least 75°, even more preferably at least 80°, even more preferably at least 85°, and even more preferably at least 90° with the fingers. If the angle is greater, there is a risk that the sealing rubber will slide off the gripper plates. The optimal angle thus ensures an optimal balance between grip and maneuverability, allowing the seal applicator to firmly hold and stretch the rubber seals.

According to a further or alternative embodiment, the seal applicator is further provided with a pusher plate to push the sealing rubber from the finger onto the tubular element, wherein the pusher plate includes at least four recesses, which recesses are suitable for receiving the gripper plates of the fingers. This design ensures controlled and precise transfer of the sealing rubber to the tubular element. The use of a pusher plate ensures that the pressure is evenly distributed during the pushing of the sealing rubber from the fingers onto the tubular element. In this context, the pressure refers to the force exerted by the pusher plate on the sealing rubber. This results in the ability of the seal applicator to effectively push and position the sealing rubber onto the tubular element without unnecessary stress on the sealing rubber.

According to a further or alternative embodiment, the device is provided with a sensor suitable for detecting the presence of sealing rubbers on the cartridges. By using a sensor to detect the presence of sealing rubbers, the system can automatically determine if the cartridge is filled. The sensor thus makes it possible to determine precisely when the seal magazine should continue to rotate. This prevents the system from unnecessarily rotating when no sealing rubbers are present, resulting in more efficient use of the seal magazine.

According to a further or alternative embodiment, the device is provided with one or more sensors suitable for detecting the presence of sealing rubbers on the fingers of the seal applicator. The one or more sensors, and preferably one or more laser sensors, are used at the seal magazine to register when a seal is present on the fingers of the seal applicator. This information serves as a signal to immediately stop the movement of the disk on the cartridge once a sealing rubber is detected on the fingers of the seal applicator. At the same time, it initiates the movement of the fingers of the seal applicator to a larger position, whereby the sealing rubber is stretched. This results in an accurate and automated process, ensuring the correct placement and manipulation of the sealing rubbers on the fingers of the seal applicator.

According to a preferred embodiment, the invention relates to a device for applying a sealing rubber to a tubular element, comprising a seal magazine for storing sealing rubbers, wherein the seal magazine is suitable for rotating around its own axis and is provided with two or more metal cartridges protruding from a housing for storing multiple sealing rubbers per cartridge, wherein each cartridge is provided with a disk to push the sealing rubber linearly over the entire length of the cartridge; and a seal applicator for selecting a sealing rubber from the seal magazine and applying the selected sealing rubber to a tubular element, wherein the seal applicator is provided with at least four fingers, wherein each finger is provided with one or more gripper plates for gripping the sealing rubbers.

According to a further or alternative embodiment, the sealing rubber is made from an elastomer, preferably from an ethylene propylene diene monomer rubber. The choice of ethylene propylene diene monomer (EPDM) rubber for the manufacture of the sealing rubber is strategically chosen to maximize the versatility and durability of the sealing rubber. This material maintains its flexibility and elasticity over a wide temperature range, which is essential for seals that must perform consistently. Moreover, EPDM is resistant to a wide range of chemicals, making the sealing rubber a reliable choice for industrial applications with potential exposure to corrosive substances. Other elastomers such as silicone rubber, known for its superior heat resistance and retention of flexibility at low temperatures, or nitrile rubber (NBR), which is oil and fuel resistant, can also be considered. Fluoroelastomers such as Viton offer even higher chemical resistance, ideal for use in aggressive chemical environments, while natural rubber with its high elasticity and tear resistance could be suitable for applications where mechanical flexibility and durability are crucial. The final choice of material will depend on the specific operational requirements of the sealing rubber and the environment in which it is used.

In a fifth aspect, the invention relates to a method for applying sealing rubbers to a tubular element.

Preferably, the method begins with applying or loading multiple rubbers onto the two or more cartridges of the seal magazine. This task will be performed by an operator who will manually apply the sealing rubbers to the respective cartridges. Alternatively, this loading or applying of the sealing rubbers onto the cartridges can be performed automatically by an automated system designed for this purpose.

Preferably, in a next step of the method, a sealing rubber is gripped from the seal magazine by the seal applicator. The seal applicator is provided with at least 4 fingers, preferably at least 5 fingers, and more preferably at least 6 fingers. Each finger has one or more gripper plates, allowing the seal applicator to effectively grip the sealing rubber from the seal magazine. To do this, the fingers of the seal applicator will move to a position where they fit within the diameter of the sealing rubber, make a forward horizontal movement to grip the sealing rubber, and stretch it to remove the sealing rubber from the cartridge.

According to a further or alternative embodiment, gripping a sealing rubber from the seal magazine involves moving the fingers provided with a gripper plate of the seal applicator to a first position where the gripper plate of each finger is within a diameter of the sealing rubber to grip a sealing rubber; making a forward horizontal movement of the seal applicator to place a gripper plate in the recesses of the cartridge; pushing the sealing rubber onto the fingers where the sealing rubber grips behind the gripper plate; stretching open the sealing rubber by moving the fingers to a second position to remove the sealing rubber from the cartridge and making a backward horizontal movement of the seal applicator.

According to a further or alternative embodiment, the sealing rubbers are pushed onto the fingers by means of a disk mounted on the cartridge of the seal magazine, wherein the disk moves the sealing rubbers linearly over the entire length of the cartridge in the direction of the fingers of the seal magazine.

According to a further or alternative embodiment, the presence of sealing rubbers on the cartridges is detected. More preferably, a disk on the cartridge is detected by a sensor, wherein the absence of detection of the disk indicates that the cartridge is empty and results in activating a rotation movement of the seal magazine to provide a filled cartridge. During the production process, the rotating mechanism plays an essential role. When a particular cartridge is empty and no longer contains sealing rubbers, the entire seal magazine initiates a rotating movement. This rotation is preferably driven by a servomotor, and the position of the magazine is accurately tracked by an encoder on the servomotor. This allows the system to assign digital position values to the various stop positions, enabling optimized and controlled storage and selection of sealing rubbers during the production process.

According to a further or alternative embodiment, the sealing rubber is stretched to a diameter larger than a diameter of the tubular element on which the sealing rubber is to be provided. This allows the sealing rubber to be effortlessly applied to the tubular element, as stretching it to a larger diameter simplifies installation and allows for smooth attachment.

Preferably, in a next step of the method, after stretching the sealing rubber, the seal applicator rotates at least 45°, preferably at least 50°, more preferably at least 60°, even more preferably at least 70°, even more preferably at least 80°, and in particular at least 90° relative to the seal magazine. This rotation ensures optimal positioning, allowing the rubber to be easily applied to a tubular element. The rotation is preferably driven by a servomotor, wherein the servomotor is more preferably provided with an encoder suitable for enabling positioning of the seal applicator.

Preferably, in a final step of the method, the sealing rubber is pushed from the seal applicator onto the tubular element. Preferably, a pusher plate will push the sealing rubber from the finger onto a tubular element. This is essential to ensure that the sealing rubber is applied firmly and snugly to the tubular element. This creates good contact between the sealing rubber and the surface of the tubular element, improving the seal and preventing possible leaks.

According to a further or alternative embodiment, the position of the fingers is adjustable.

According to a further or alternative embodiment, the fingers have a closed position. This is the position the fingers go to, to take a seal from a cartridge. It is the smallest position the fingers assume and will depend on the diameter of the tube. The closed position of the fingers is always smaller than the diameter of the cartridge of the seal magazine. Preferably, when the fingers closed position is reached, the seal applicator will start the forward movement to receive and further grip a sealing rubber from a cartridge.

According to a further or alternative embodiment, an open position of the fingers is a maximum of 200 mm. The maximum open position of the fingers is the point where the fingers move to fully stretch the sealing rubber. This is the largest position set to stretch the sealing rubber. A maximum fingers open position of 200 mm means that the fingers are a maximum of 200 mm from the center of the circle in the circular arrangement. Incorrect setting of this value can result in twisted sealing rubbers on the fingers. More preferably, when the fingers reach this position for stretching a sealing rubber, the seal applicator will make a backward linear movement to move away from the cartridge.

According to a further or alternative embodiment, a push-off position of the fingers is a maximum of 2 cm larger than the diameter of the tubular element on which the sealing rubber is placed. This push-off position is the position the fingers move to after stretching the rubber and is the position of the fingers before the rubber is pushed onto the tubular element. The fingers thus move to this position to push the seal off and onto the product. Preferably, the fingers will move to this position before the [MISSING TEXT].

According to a preferred embodiment, the method comprises the steps of: applying multiple sealing rubbers onto two or more cartridges of a seal magazine, wherein each cartridge is provided with at least four recesses to receive a gripper plate of a seal applicator; gripping a sealing rubber from the seal magazine using the seal applicator, wherein the seal applicator is provided with at least four fingers, wherein each finger is provided with at least one gripper plate for gripping the sealing rubber; and pushing the sealing rubber from the seal applicator onto the tubular element.

According to a further or alternative embodiment, the method is suitable for execution on a device according to the first aspect of the invention.

A person of ordinary skill in the art will appreciate that the method according to a second aspect of the invention can be performed on a device according to the first aspect for applying a sealing rubber to a tubular element. Furthermore, each feature described above as well as below, may relate to any of the three aspects, even if the feature is described in conjunction with a specific aspect of the present invention.

In a sixth aspect, the invention relates to the use of the device according to the first aspect of the invention or the method according to the second aspect of the invention for applying a sealing rubber to a tubular element. The invention concerns a device and method for applying sealing rubbers to tubular elements, such as connectors for ventilation ducts. In ventilation systems, it is essential to minimize air leakage and maintain a good seal. This innovative approach allows ventilation ducts to be sealed efficiently and accurately, resulting in improved airtightness and better control over airflow. This can optimize the energy efficiency and performance of the ventilation system, which is beneficial for both energy savings and healthier air quality in the respective spaces.

A preferred embodiment concerns a device and method for applying sealing rubbers to tubular elements. This device uses a seal magazine and a seal applicator that together enable efficient and accurate application of sealing rubbers.

The seal magazine is designed for storing multiple sealing rubbers and consists of a rotation system with two or more metal cartridges. Each cartridge can store multiple sealing rubbers and is equipped with a disk that serves to push the sealing rubbers linearly over the entire length of the cartridge. Additionally, the device is equipped with one or more sensors that can detect the presence of sealing rubbers in the cartridges, so the system continuously has insight into the stock and can timely rotate to a filled cartridge when needed.

The seal applicator selects the sealing rubbers from the seal magazine and applies them to the tubular element. This applicator is equipped with four or more fingers, wherein each finger is provided with gripper plates to firmly grasp the sealing rubbers. The fingers of the seal applicator are placed in a circular arrangement, wherein the gripper plates are attached at the end of the fingers at an angle of at least 45° for optimal grip on the sealing rubbers. The applicator is also equipped with sensors that detect the presence of sealing rubbers on the fingers, ensuring reliable execution of the process.

When applying the sealing rubber to the tubular element, the seal applicator grips a sealing rubber from the magazine by placing the fingers in the recesses of the cartridge. Subsequently, the sealing rubber is pushed onto the fingers by means of a disk, after which the fingers grip the rubber and stretch it to a diameter larger than that of the tubular element. This allows the sealing rubber to be easily and accurately applied to the tubular element.

Additionally, the device is equipped with a pusher plate that assists in placing the sealing rubber on the tubular element. The pusher plate contains recesses that correspond to the position of the gripper plates, which pushes the sealing rubber from the fingers to the tubular element in a controlled manner. This setup ensures precise and efficient application without damaging the tubular element or the sealing rubber.

A preferred embodiment also includes a method for applying the sealing rubber, wherein the sealing rubbers are first placed in the cartridges of the seal magazine. Subsequently, the sealing rubbers are taken from the magazine using the fingers of the seal applicator, stretched, and finally applied to the tubular element. The device uses laser sensors to detect the presence of sealing rubbers, both in the cartridges and on the fingers, to ensure a reliable and consistent process. When a cartridge is empty, a rotation movement is automatically activated to bring a new, filled cartridge to the applicator.

A preferred embodiment offers an efficient solution for applying sealing rubbers to tubular elements, with a focus on accuracy, automation, and reliability. The specific setup of the fingers, gripper plates, and sensors ensures that the process runs smoothly without issues arising from a missing sealing rubber or incorrect positioning. This technique is suitable for application in situations where seals are essential, such as in pipeline systems or other tubular constructions.

In what follows, the invention is described by means of non-limiting examples or figures illustrating the invention, which are not intended or should be interpreted as limiting the scope of the invention.

### DESCRIPTION OF THE DRAWINGS

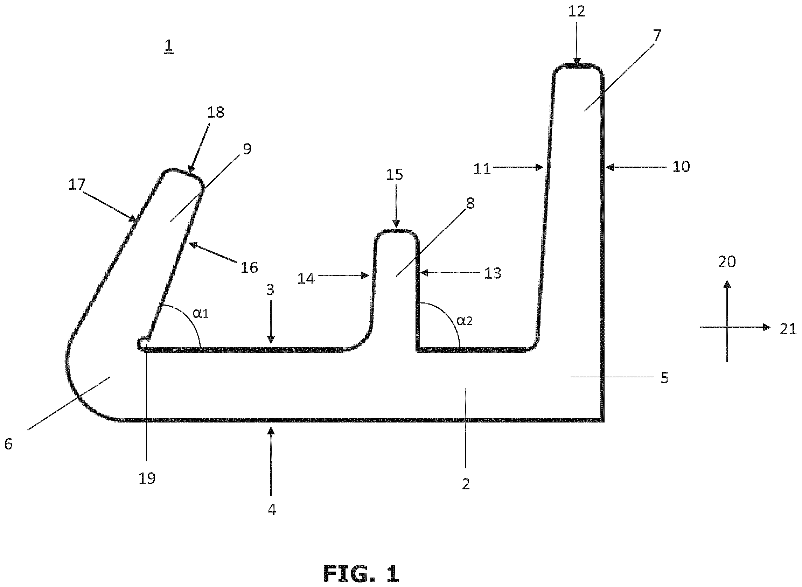

Figures 1 to 4 show cross-sections of a sealing rubber (3) with three lips (7, 8, 9) according to different embodiments of the invention.

The sealing rubber (1) comprises a base (2) and three lips (7,8,9), which three lips (7,8,9) are located on the top side (3) of the base (2). The first lip (7) is positioned at a first end (5) of the base (2), while the third lip (9) is positioned at the second end (6) of the base (2). The second lip (8) is located between the first (7) and third lip (9). Notably, the second lip (8) is always smaller, or less high, than the first lip (7).

Figure 1 shows a cross-section of the sealing rubber (1) with the three integrated lips (7, 8, 9). The base (2) of the sealing rubber (2) has a height (20) of 1.2 mm and a width (21) of 9.0 mm, while the length can vary from 216 mm to 352 mm, allowing versatility in applications.

The first lip (7), with a height (20) of 4.8 mm and a width (21) ranging from 0.8 mm to 1.1 mm, provides a solid barrier for sealing due to its robust design. This lip (7) is distinguished by a rectangular configuration on the first side (10) that stands perpendicular to the base, ensuring a firm and stable attachment against the tubular element. The second side (11) tapers conically or narrows towards a rounded top side (12) and provides a gradual transition that helps to distribute pressure evenly. The rounded top side (12) of the first lip (7) reduces the chance of wear from friction, contributing to a long-lasting and durable seal. This design makes the first lip (7) particularly effective in sealing, as it creates a strong yet flexible barrier against liquids and gases.

The second lip (8), more compact in shape, has a height (20) of 2.0 mm and a width (21) between 0.7 mm and 0.8 mm. The first side (13) stands perpendicular to the base (2), forming an angle of about 90°. The opposite second side (14) of this lip (8) has a gentle curve at the base (2) with a radius of 0.5 mm, contributing to a tapered shape that culminates in rounded corners. This shape of the second lip (8) ensures that the lip (8) can precisely adapt to the contours of the surface it must seal, ensuring the integrity of the sealing rubber (1) under various conditions. At the same time, the exact fit makes the lip (8) highly effective in preventing leakage. Moreover, this design choice facilitates not only a reliable seal during use but also ease of disassembly when needed, without damaging the sealing rubber (1) or surrounding components.

The third lip (9) has a height (20) of 3.2 mm and a width (21) between 1.2 mm and 0.7 mm. The third lip is positioned at a second end of the base and tilts at an angle towards the second lip. Along the second side (17) and the second end (6) of the base (2), there is a rounding with a radius of 1.0 mm that contributes to effective guidance, positioning, and clamping. The first side (16) of the third lip (9) has a notch (19) with a radius of about 0.1 mm at the base (2). The angle (α₁) between the base and the third lip (9) is about 70°. The top side (18) of the third lip (9) is provided with rounded corners.

The carefully determined distances between the lips (7, 8, 9), with 2.0 mm between the first lip (7) and second lip (8) and 3.9 mm between the second lip (8) and third lip (9), ensure an optimal balance between fixed positioning and flexibility. This design ensures that the lips do not touch when the sealing rubber is installed, which is crucial for allowing smooth disassembly without disrupting the integrity of the seal. This configuration contributes to the overall functionality of the sealing rubber (1) by ensuring optimal performance both during use and when removing the sealing rubber (1).

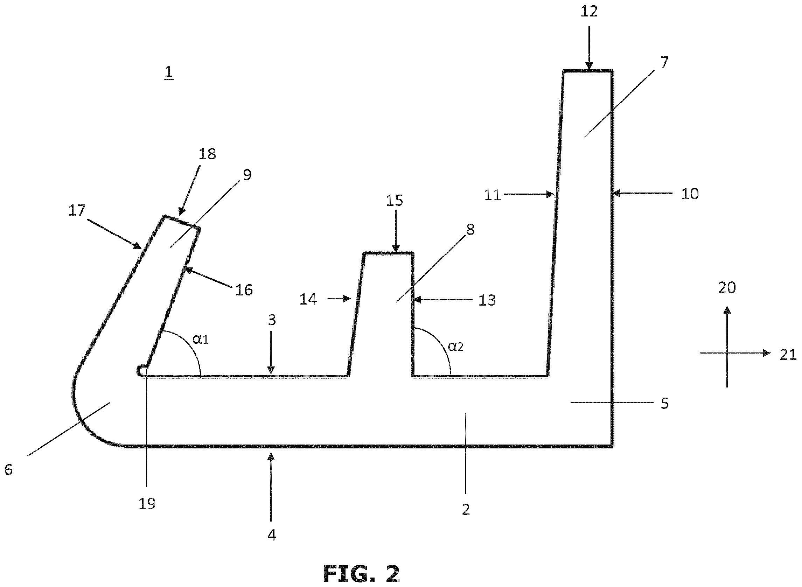

Figure 2 shows a sealing rubber (1) whose base (2) has a height (20) of 1.3 mm and a width (21) of 10.0 mm. The length varies between 394 mm and 526 mm, allowing it to adapt to different sizes.

The first lip (7) has a height (20) of 5.7 mm and a width (21) between 0.9 mm and 1.2 mm. The first side (10) of the first lip (7) is perpendicular to the base (2). The second side (11) of the first lip (7) tapers to the top side (12) of the first lip (7).

The second lip (8) has a height (20) of 2.3 mm and a width (21) between 0.9 mm and 1.2 mm. The first side (13) of the second lip (8) is upright and forms an angle (α₂) of about 90° with the base (2). The second side (14) of the second lip (8) tapers to the top side (15) of the second lip (8).

The third lip (9) has a height (20) of 3.0 mm and a width (21) between 0.7 mm and 1.2 mm. The third lip (9) is positioned at a second end (6) of the base (2) and tilts at an angle (α₁) towards the second lip (8). The first side (16) of the third lip (9) has a notch (19) with a radius of about 0.1 mm at the base (2). The angle (α₁) between the base (2) and the third lip (9) is about 70°. The distance between the first lip (7) and the second lip (8) is 2.5 mm, and the distance between the second (8) and the third lip (9) is 3.8 mm.

Figure 3 shows a sealing rubber (1) whose base (2) has a height (20) of 1.3 mm and a width (21) of 11.0 mm. The length varies between 534 mm and 791 mm.

The first lip (7) has a height (20) of 7.7 mm and a width (21) between 1.0 mm and 1.5 mm. The first side (10) of the first lip (7) is perpendicular to the base (2). The second side (11) of the first lip (7) tapers to the top side (12) of the first lip (7).

The second lip (8) has a height (20) of 2.7 mm and a width (21) between 0.9 mm and 1.2 mm. The first side (13) of the second lip (8) is upright and forms an angle (α₂) of about 90° with the base (2). The second side (14) of the second lip (8) tapers to the top side (15) of the second lip (8).

The third lip (9) has a height (20) of 3.7 mm and a width (21) between 1.0 mm and 1.4 mm. The radius along the end is 1 mm. The third lip (9) is positioned at a second end (6) of the base (2) and tilts at an angle (α₁) towards the second lip (8). The first side (16) of the third lip (9) has a notch (19) with a radius of about 0.1 mm at the base (2). The angle (α₁) between the base (2) and the third lip (9) is about 70°.

The distance between the first lip (7) and the second lip (8) is 3.0 mm, and the distance between the second lip (8) and the third lip (9) is 4.9 mm.

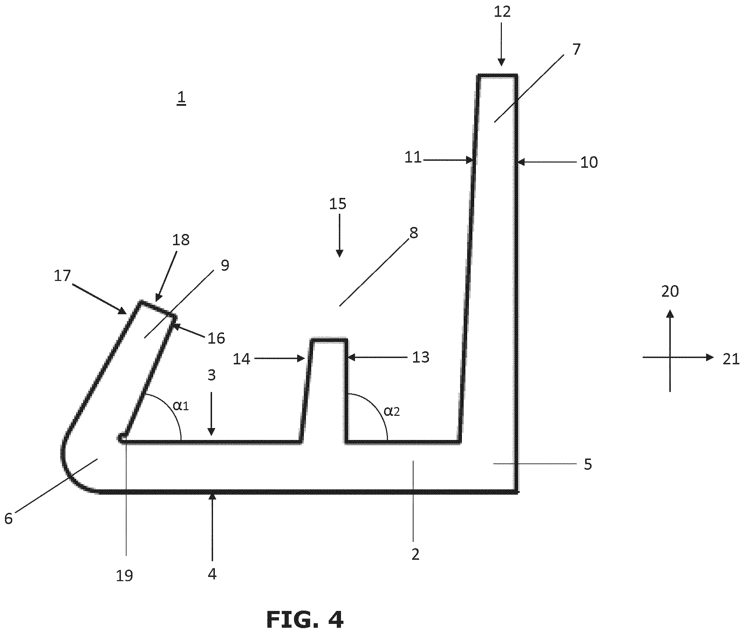

Figure 4 shows that the base (2) has a height (20) of 1.4 mm and a width (21) of 12.0 mm. The length varies between 848 mm and 1124 mm.

The first lip (7) has a height (20) of 9.7 mm and a width (21) between 1.0 mm and 1.5 mm. The first side (10) of the first lip (7) is perpendicular to the base (2). The second side (11) of the first lip (7) tapers to the top side (12) of the first lip (7).

The second lip (8) has a height (20) of 2.7 mm and a width (21) between 0.9 mm and 1.2 mm. The first side (13) of the second lip (8) is upright and forms an angle (α₂) of about 90° with the base (2). The second side (14) of the second lip (8) tapers to the top side (15) of the second lip (8).

The third lip (9) has a height (20) of 3.7 mm and a width (21) between 1.0 mm and 1.5 mm. The third lip (9) is positioned at a second end (6) of the base (2) and tilts at an angle (α₁) towards the second lip (8). The radius along the second end (6) is about 1.0 mm. The first side (16) of the third lip (9) has a notch (19) with a radius of about 0.1 mm at the base (2). The angle (α₁) between the base (2) and the third lip (9) is about 70°.

The distance between the first lip (7) and the second lip (8) is 3.0 mm, and the distance between the second lip (8) and the third lip (9) is 4.8 mm.

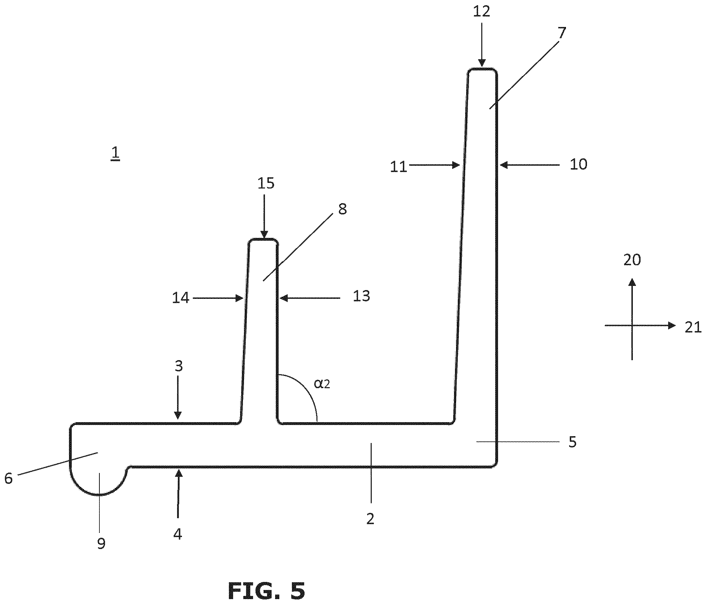

Figure 5 shows a cross-section of the sealing rubber (1) comprising three lips (7, 8, 9) according to an embodiment of the invention. The sealing rubber (1) includes a base (2) and three lips (7, 8, 9). Two lips (7, 8) are located on the top side (3) of the base (2), while a third lip (9) is provided along the underside (4) of the base (2).

The base (2) has a height (20) of 1.5 mm and a width (21) of 15.0 mm. The length varies between 1295 mm and 3454 mm.

The first lip (7) has a height (20) of 12.5 mm and a width (21) between 1.0 mm and 1.5 mm. The first side (10) of the first lip (7) is perpendicular to the base. The second side (11) of the first lip (7) tapers to the top side (12) of the first lip (7).

The second lip (8) has a height (20) of 6.5 mm and a width (21) between 1.0 mm and 1.3 mm. The first side (13) of the second lip (8) is upright and forms an angle (α₂) of about 90° with the base (2). The second side (14) of the second lip (8) tapers to the top side (15) of the second lip (8).

The distance between the first lip (7) and the second lip (8) is 3.0 mm, and the distance between the second lip (8) and the third lip (9) is 4.8 mm.

The third lip (9) is located at the second end (6) of the underside (4) of the base (2). This third lip (9) has a curved shape with a rounding that has a radius of 1.0 mm.

The first lip (7) functions as a sealing lip adapted to seal against an inner surface of a pipe element or fitting. The second lip (8) acts as an intermediate sealing lip, providing additional sealing against the inner surface of the tubular element. The third lip (9) provides clamping, in other words, securing the sealing rubber (1) in the tubular element. Regarding the height of the lips (7, 8, 9), it has been found advantageous that the second lip (8) is smaller than the first lip (7). This configuration significantly facilitates the disassembly process.

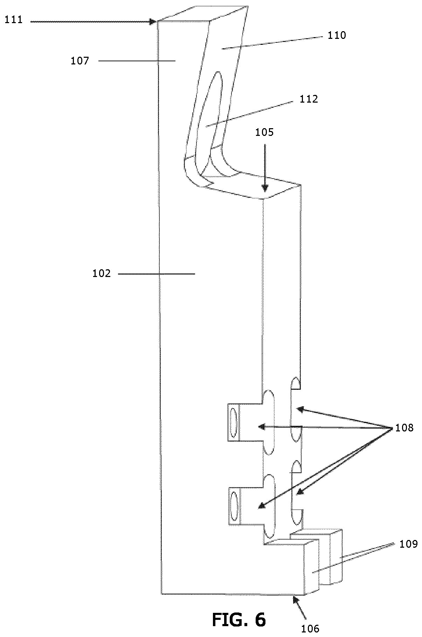

Figure 6 shows a finger (102) provided with one gripper plate (107). This finger (102), which has a beam-shaped form with a distinctive top (105) and bottom (106), plays a crucial role in gripping and stretching the sealing rubber (101).

The bottom (106) of the finger (102) is specifically designed to be securely mounted on or to the seal applicator (104). To this end, the bottom (106) of the finger (102) is provided with four holes (108) that can receive a screw or the like and a protrusion (109) for positioning and locking the finger (102) on the seal applicator (104). This combination of fasteners ensures a secure mounting of the gripper plate (107) to the finger (102) of the seal applicator (104).

The top (105) of the finger (102) is provided with a gripper plate (107), wherein the gripper plate (107) is designed to receive the sealing rubber (101). To this end, the gripper plate (107) has an inclined side (110), causing the sealing rubber (101) to tilt slightly backward when stretched. In this way, the rubber fits perfectly into the beveling. The inclined side (110) has a widest point (111) along the top of the gripper plate (107) and gradually narrows towards the top (105) of the finger (102). Furthermore, a hole (112) is provided in this inclined side (110). This hole (112) functions as a guide point and attachment point for the sealing rubber (101) during stretching. It helps to keep the sealing rubber (101) in the desired position and contributes to controlled movement during the manipulation of the sealing rubber (101).

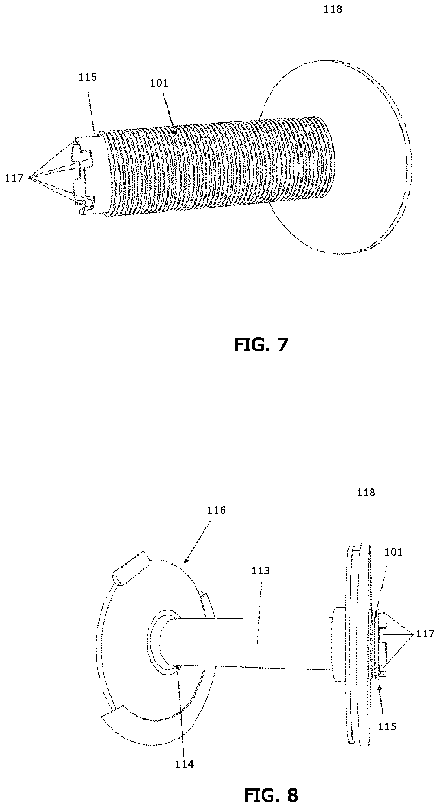

Figure 7 shows a full cartridge (113) of a seal magazine (103). In this figure, it can be seen that the cartridge (113) extends outward from the housing (116) of the seal magazine (103) and is provided with multiple sealing rubbers (101). The cartridge (113) includes a first end (114) and an opposite second end (115), wherein the first end (114) is located at the housing (116), wherein the second end (115) is provided with recesses (117), which are suitable for receiving the fingers (102) of the seal applicator (104). These recesses (117) will prevent the fingers (102) of the seal applicator (104) from colliding with the metal cartridges (113). Finally, this cartridge (113) is also provided with a plastic disk (118) that will linearly push the sealing rubbers (101) over the entire length of the cartridge (113). The plastic disk (118) is positioned at the first end (114) of the cartridge (113), between the sealing rubbers (101) and the housing (116) of the seal magazine (103).

Figure 8 shows an empty cartridge (113) of a seal magazine (103). In this figure, it can be seen that the cartridge (113) extends outward from the housing (116) of the seal magazine (103). The cartridge (113) includes a first end (114) and an opposite second end (115), wherein the first end (114) is located at the housing (116), wherein the second end (115) is provided with recesses (117), which are suitable for receiving the fingers (102) of the seal applicator (104). Finally, this cartridge (113) is also provided with a plastic disk (118) that will linearly push the sealing rubbers (101) over the entire length of the cartridge (113). The plastic disk (118) is positioned at the second end of the cartridge (113) in this figure.

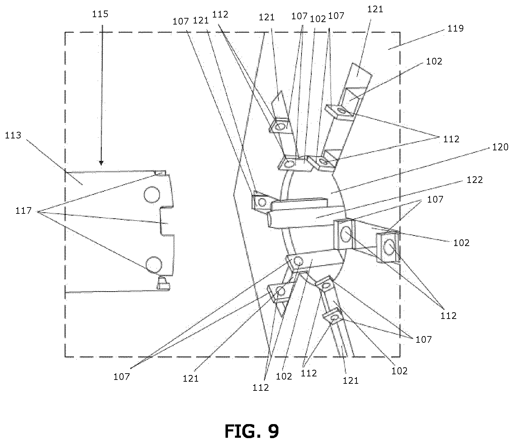

Figures 9, 10, 11, and 12 illustrate the positioning of a cartridge (113) of the seal magazine (103) at the seal applicator (104) and show different steps of the method in which the sealing rubber (101) is removed from the cartridge (113) by the seal applicator (104) and then stretched, ready to be attached to a tubular element.

In these figures, a second end of a cartridge (113) can be seen, which cartridge (113) is provided with recesses (117) for receiving the fingers (102) and gripper plates (107) of the seal applicator (104). The seal applicator (104) has 6 fingers (102), wherein each finger (102) is equipped with two gripper plates (107). Additionally, the pusher plate (119) is also visible, which includes recesses (121) for receiving the fingers (102) and gripper plates (107). The fingers (102) are arranged in a circular configuration, wherein the first end (125) of the fingers (102) is located on a first radius of a first circle (123) and each finger (102) extends from the first radius to a second larger radius of a larger second circle (124). The second end (126) of the fingers (102) is positioned on this second larger radius of the second circle (124). The first radius and the second ray are in each other's extension. Furthermore, each finger (102) includes two gripper plates (107), wherein the first gripper plate (107) is attached to the first end (125) of the finger (102) and the second gripper plate (107) to the second end (126) of the finger (102).

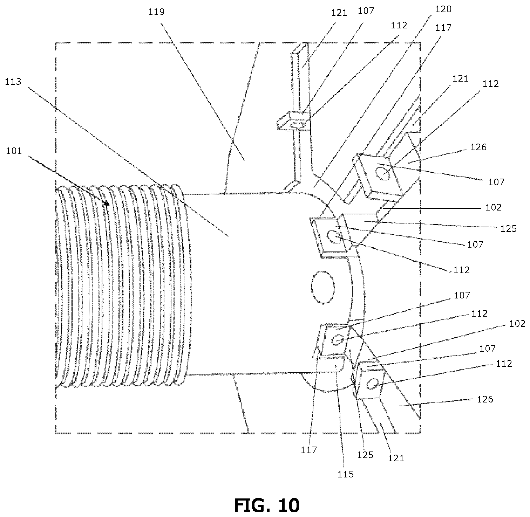

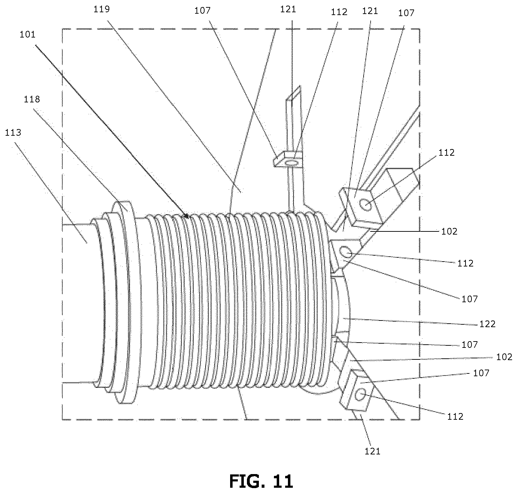

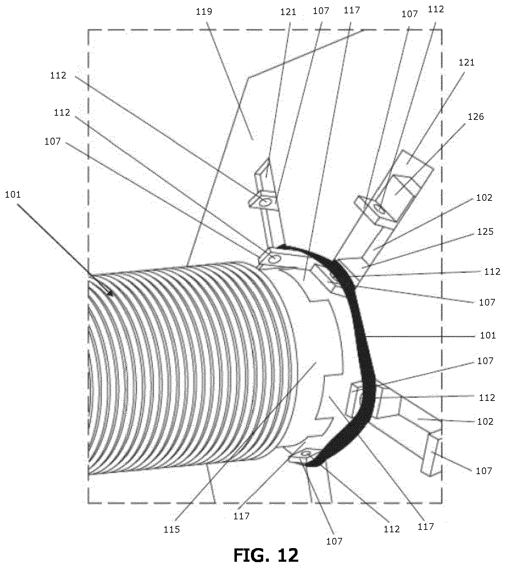

Figure 10 shows that the seal applicator (104) has made a forward horizontal movement into the cartridge (113), causing the first gripper plate (107) to align with the provided recesses (117) of the cartridge (113). The fingers (102) have been moved to a small position, towards the center of the circle, so that they fit into the recesses (117) of the cartridge (113) without colliding with them to then receive a sealing rubber (101). Subsequently, as shown in figure 11, a sealing rubber (101) is pushed behind the first gripper plate (107). Finally, figure 12 shows the stretching of the sealing rubber (101), wherein the fingers (102) have been moved to a larger position, away from the center of a circle (123, 124) or the pusher plate. After this, the sealing rubber (101) can be placed on a tubular element, wherein the seal applicator (104) rotates and then pushes the sealing rubber (101) onto the tubular element using the pusher plate (119).

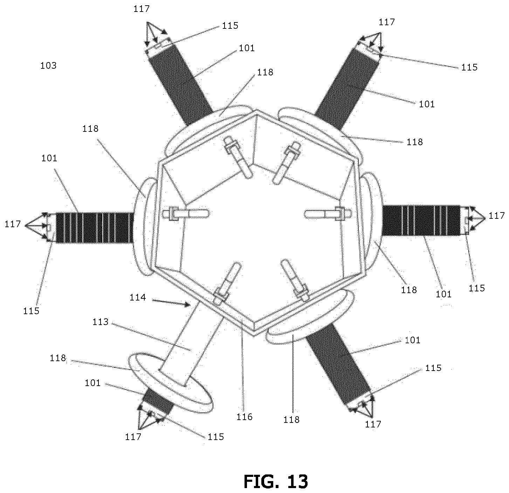

Figure 13 shows a top view of a seal magazine (103). The seal magazine (103) includes a housing (116), and notably, the six cartridges (113) protrude outward from this housing (116). These cartridges (113) serve as holders for the sealing rubbers (101) and play a central role in the automated process of supplying and preparing the sealing rubbers (101). They are strategically positioned to enable streamlined operation and efficient manipulation of the sealing rubbers (101). When a specific cartridge (113) no longer contains sealing rubbers (101), an automated response is activated: the entire rubber magazine undergoes a rotating movement. With its six cartridges (113), the seal magazine (103) will rotate approximately 60° to reach a new cartridge (113) that is provided with seals (101). This precisely synchronized rotation is made possible by a servomotor that drives the seal magazine (103).

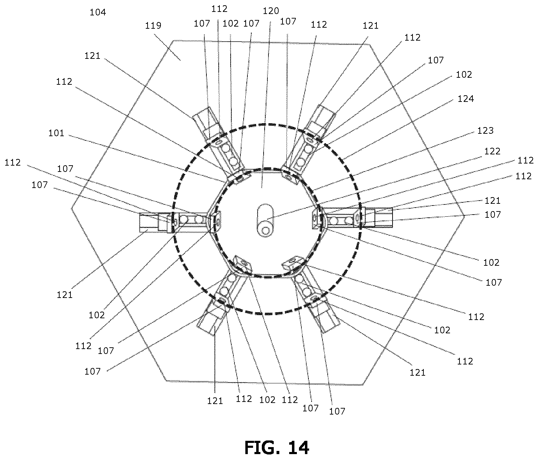

Figure 14 shows a front view of a seal applicator (104). Here, the hexagonal pusher plate (119) is a notable feature. In the center of this pusher plate (119) is a circular recess (120) with six slot-shaped openings or recesses (121) that serve to receive the fingers (102) and gripper plates (107) of the seal applicator (104). The seal applicator (104) further includes six fingers (102), each equipped with two gripper plates (107). The fingers (102) are arranged in a circular configuration, wherein the first end (125) of the fingers (102) is positioned on a first radius of a first circle (123). From this first radius, the fingers (102) extend to a second larger radius of the second circle (124), wherein the second end (126) of the fingers (102) is positioned. At the first end (125) of a finger (102) is a first gripper plate (107), designed for gripping smaller diameters of sealing rubber (101). At the second end (126) of a finger (102) is a second gripper plate (107), intended for handling larger diameters of sealing rubber (101). In the center of the hexagon of the pusher plate (119) is a protrusion (122) specifically designed to fit into the cartridge (113). This protrusion (122) plays a role in accurately positioning the seal applicator (104) on a cartridge (113) of the seal magazine (103).

### EXAMPLES

The present invention will now be further explained with reference to the following examples. The present invention is in no way limited to the given examples or to the embodiments presented in the figures.

### Example 1: Device and method for applying a sealing rubber to a ventilation duct.

The device comprises 2 main parts: the seal magazine and the seal applicator. The seal magazine is a storage for the sealing rubbers to be applied. The seal applicator will apply the sealing rubbers with a diameter of approximately 125 mm to a tubular ventilation duct.

### The seal magazine

The seal magazine consists of 6 metal cartridges where the sealing rubbers are stored. Each cartridge preferably has a diameter between 130 mm and 140 mm. The diameter of the cartridge is therefore always slightly smaller than the diameter of the sealing rubber. The sealing rubber should hang a little loose on the cartridge to ensure that it can easily slide on the cartridge. Each cartridge will contain an average of between 32 and 43 sealing rubbers. The entire seal magazine, comprising 6 cartridges, will thus be able to store a total of 192 to 258 sealing rubbers. Each cartridge includes a first end and an opposite second end, wherein the first end is located at the housing, wherein the second end is provided with 6 recesses for receiving the fingers of the seal applicator. These recesses will prevent the fingers of the seal applicator from colliding with the metal cartridges. Finally, each cartridge is also provided with a plastic disk that will linearly push the rubbers over the entire length of the cartridge.

### 1. Seal magazine operator

The sealing rubbers are manually applied to the cartridges by an operator. The operator takes about 1 minute to fully equip a cartridge with sealing rubbers. Filling the entire seal magazine, comprising 6 cartridges, thus takes around 6 minutes. This, of course, depends on the speed and experience of the operator.

### 2. Operation of the seal magazine

During production, when a cartridge no longer contains sealing rubbers and is therefore empty, the entire seal magazine will rotate around its own central axis to a cartridge that is filled, or provided with sealing rubbers. The seal magazine consists of 6 cartridges, resulting in 6 stop positions. Therefore, the seal magazine must rotate 60° each time to reach a new cartridge with sealing rubbers. The realization of these 6 positions is made possible by the rotating movement of a servomotor that drives the seal magazine. The use of an encoder on the servomotor allows the assignment of digital position values to the different stop positions.

On the metal cartridge, there is a plastic disk that will linearly push the rubbers over the entire length of the cartridge. A horseshoe-shaped fork will grip the plastic disk by means of a vertical movement of the fork. This movement is achieved by a pneumatic cylinder located at the base of the fork. A sensor will then detect whether the disk is clamped or not. When the sensor does not detect a disk, this means that the cartridge is empty and the magazine will rotate 60° for a new filled cartridge. The fork will push the plastic disk, causing the sealing rubbers to move linearly over the entire length of the cartridge. This horizontal movement is achieved by driving a linear axis with a servomotor.

### The seal applicator

The seal applicator is the part of the device that removes the sealing rubbers from the metal cartridges and then applies them to the ventilation duct. The seal applicator is provided with 6 fingers, each positioned approximately 60° relative to each other. Each finger is equipped with 2 gripper plates. A first gripper plate for small diameters and a second gripper plate for the large diameters of sealing rubbers. In this context, a small diameter means a diameter less than or equal to 150 mm, while a large diameter refers to a diameter greater than 150 mm. In this case, the first gripper plate will grip behind the sealing rubber, which has a diameter of 125 mm.

These fingers are driven by a servomotor, and the movement of the servomotor is transmitted to the fingers via a transmission. In the transmission, the rotary movement of a servomotor is converted into a linear movement of the fingers. The transmission consists of a large bevel gear that transmits the movement of the servomotor to 6 small bevel gears. These, in turn, drive 6 spindles over which the 6 fingers move. The servomotor is equipped with an encoder, allowing a specific position to be assigned to the fingers.

A pusher plate will push the sealing rubbers from the fingers onto the ventilation duct. This pusher plate is provided with 6 recesses to receive the fingers and effectively transfer the rubbers.

Finally, a sensor is integrated into the device to detect the presence of sealing rubbers on the cartridges and inform the system when a cartridge is empty, resulting in an automatic rotation to position a filled cartridge.

### Cycle for applying a sealing rubber to a tubular element.

1. The fingers move to the fingers closed position so they can move into the cartridge to grip a sealing rubber. Then the seal applicator makes a forward horizontal movement into the cartridge, via the provided recesses, by means of a pneumatic cylinder;
2. then the plastic disk on the cartridge will push the sealing rubbers onto the fingers. The plastic disk will stop its horizontal movement as soon as a laser sensor detects a sealing rubber on the fingers. At this same moment, the fingers of the seal applicator will move to a fingers open position and thus stretch the sealing rubber;
3. after this, the seal applicator makes a backward horizontal movement, away from the seal magazine, using a pneumatic cylinder;
4. then the seal applicator will rotate approximately 90° relative to the seal magazine. This movement again takes place by a servomotor with encoder; and
5. finally, the sealing rubber is pushed onto the ventilation duct, with the fingers moving to the finger push-off position, and the horizontal movement of the pusher plate will push the sealing rubber onto the ventilation duct.

After this, this cycle starts again, and the seal applicator moves back to the cartridge to take a new sealing rubber.

The cycle times for applying a sealing rubber to a tubular element range between 10 and 24 seconds. The entire device thus takes between 19 and 45 minutes to empty a fully filled magazine with 6 cartridges.

The inventors found that the precision and consistency of applying rubber seals to the tubular elements were significantly increased by means of this device and method, leading to a noticeable improvement in production efficiency. Moreover, the quality of the products was ensured by the uniform placement of the sealing rubbers.

### Example 2: Configuration of the seal magazine.

The adaptability of the device was tested with different sets of metal cartridges, each adapted to a different diameter of the sealing rubbers.

The cartridges of the seal magazine can be exchanged depending on the diameter of the product, i.e., the connector or tubular element being produced on the production line. Each product diameter has a set of unique cartridges, with a specific cartridge diameter. The rubber seals applied to the cartridges in the seal magazine can have different diameters and thicknesses depending on the product. There will therefore be fewer rubbers on a cartridge on which large and wide rubbers are stored than on a cartridge with small and narrow rubbers.

Suppose a first metal cartridge is configured for a sealing rubber with a diameter of approximately 80 mm. In the event that production requires processing another diameter, for example, a sealing rubber with a diameter of approximately 315 mm, the cartridge for the sealing rubber of approximately 80 mm can easily be replaced by a specifically designed cartridge for a sealing rubber of approximately 315 mm. This interchangeability facilitates a seamless transition to various product configurations. Preferably, the cartridges include a diameter of at least 80 mm and at most 315 mm.

By simply exchanging the cartridges, the device can easily switch between different product diameters. The ability to adapt the device to different products led to an improvement in the production cycle and, in turn, to increased production capacity.

The present invention is in no way limited to the embodiments described in the examples and/or shown in the figures. On the contrary, methods according to the present invention can be realized in many different ways without departing from the scope of the invention.

## Claims

1. Sealing rubber suitable for providing on the outside of a tubular element to create a seal when the tubular element is placed in an outer tubular element, comprising: a base and at least three lips, wherein a first lip and a second lip are suitable for sealing against an inner surface of the outer tubular element, wherein a third lip is suitable for being clamped by an end portion of the outer tubular element, wherein the first lip and the second lip are provided on a top side of the base, wherein the first lip is provided on a first end of the base and the third lip is provided on a second end of the base, wherein the second lip is provided between the first and the third lip, **characterized in that** a second lip has a height that is smaller than a width measured across the base between the first lip and the second lip, and wherein the height of the second lip is smaller than the height of the first lip, wherein the first lip in cross-section is provided with an upright first side on the base, an opposite second side, and a top side connecting the first side and the second side, and wherein the second side of the first lip tapers to the top side, so that the first lip in cross-section has a ratio between a width at the base and a width at the top side of at least 1.0 and at most 3.0.

2. The sealing rubber according to the preceding claim 1, **characterized in that** the second lip in cross-section is provided with a first side, an opposite second side, and a top side connecting the first side and the second side, wherein the first side of the second lip is directed towards the second side of the first lip and is provided upright on the base, preferably the first side of the second lip makes an angle of at least 85° and at most 95° to the base.

3. The sealing rubber according to claim 2, **characterized in that** the second side of the second lip tapers to the top side, wherein the second lip in cross-section has a ratio between a width at the base and a width at the top side of at least 1.0 and at most 3.0.

4. The sealing rubber according to any of the preceding claims 1 to 3, **characterized in that** the third lip is provided on the top side of the base and at an angle of at least 50° and at most 85° to the base.

5. The sealing rubber according to claim 4, **characterized in that** the third lip includes a first side located along the second lip, wherein the first side of the third lip includes a notch, preferably the notch is provided on the base.

6. The sealing rubber according to claim 5, **characterized in that** the notch includes a radius of at least 0.1 mm.

7. The sealing rubber according to any of the preceding claims 1 to 3, **characterized in that** the third lip is provided on the underside of the base.

8. The sealing rubber according to any of the preceding claims 1 to 7, **characterized in that** the second end of the base is rounded.

9. The sealing rubber according to any of the preceding claims 1 to 8, **characterized in that** the sealing rubber is made from an elastomer, preferably from ethylene propylene diene monomer rubber.

10. The sealing rubber according to any of the preceding claims 1 to 9, **characterized in that** the sealing rubber has a hardness of at least 50 and at most 90 Shore A.

11. The sealing rubber according to any of the preceding claims 1 to 10, **characterized in that** the sealing rubber has a density of at least 0.5 g/cm³ and at most 2.0 g/cm³.

12. The sealing rubber according to any of the preceding claims 1 to 11, **characterized in that** the sealing ring is annular, suitable for providing on an outside of a tubular element.

13. Kit for sealing a tubular element, the kit comprising at least two tubular elements and at least one sealing rubber, **characterized in that** the sealing rubber is according to any of the preceding claims 1-12.

14. Use of the sealing rubber according to any of the preceding claims 1 to 12 or of the kit according to claim 13 for sealing tubular elements.

15. A device for applying a sealing rubber to a tubular element, comprising:
a. a seal magazine for storing sealing rubbers, wherein the seal magazine is suitable for rotating around its own axis and is provided with two or more metal cartridges protruding from a housing for storing multiple sealing rubbers per cartridge, wherein each cartridge is provided with a disk to linearly push the sealing rubber over the entire length of the cartridge **characterized in that** the device is further provided with one or more sensors suitable for detecting the presence of sealing rubbers on the cartridges;
b. a seal applicator for selecting a sealing rubber from the seal magazine and applying the selected sealing rubber to a tubular element, wherein the seal applicator is provided with at least four fingers, wherein each finger is provided with one or more gripper plates for gripping the sealing rubbers. **characterized in that the** device is provided with one or more sensors suitable for detecting the presence of sealing rubbers on the fingers of the seal applicator.
